# EUROPÄISCHE PATENTSCHRIFT

(11) **EP 3 177 973 B1**
(45) Veröffentlichungstag und Bekanntmachung des Hinweises auf die Patenterteilung: **24.06.2020**
(21) Anmeldenummer: 15750029.9
(22) Anmeldetag: 05.08.2015
(51) Int. Cl.: G05B 19/042, G05B 19/05, G06F 11/00

(54) **VERFAHREN ZUM BETREIBEN EINER SICHERHEITSSTEUERUNG UND AUTOMATISIERUNGSNETZWERK MIT EINER SOLCHEN SICHERHEITSSTEUERUNG**
METHOD FOR OPERATING SECURITY CONTROL AND AUTOMATION NETWORK HAVING SUCH SECURITY CONTROL
PROCÉDÉ DE FONCTIONNEMENT D'UN AUTOMATE DE SÉCURITÉ ET RÉSEAU D'AUTOMATISATION AYANT UN TEL AUTOMATE DE SÉCURITÉ

(30) Priorität: 08.08.2014 DE 102014111361
(43) Veröffentlichungstag der Anmeldung: 14.06.2017
(73) Patentinhaber: Beckhoff Automation GmbH, 33415 Verl (DE)
(72) Erfinder: SACHS, Jens, 32469 Petershagen (DE); SCHILLER, Frank, 90409 Nürnberg (DE); BÜTTNER, Holger, 12157 Berlin (DE)
(74) Vertreter: Patentanwaltskanzlei WILHELM & BECK
(86) Internationale Anmeldenummer: PCT/EP2015/068084
(87) Internationale Veröffentlichungsnummer: WO 2016/020449

(56) Entgegenhaltungen:
- EP-A1- 0 905 594
- WO-A1-2004/097539
- DE-A1-102007 028 767
- DE-A1-102009 054 155
- DE-A1-102010 009 458
- US-A1- 2003 009 610
- US-B1- 7 870 299

## Beschreibung

Die Erfindung betrifft ein Verfahren zum Betreiben einer Sicherheitssteuerung auf einem Automatisierungsnetzwerk mit einem Master-Teilnehmer und einer Mehrzahl von Slave-Teilnehmer, denen unterschiedliche Sicherheitsanforderungsstufen zugeordnet sind, und ein Automatisierungsnetzwerk mit einer solchen Sicherheitssteuerung.

Moderne Konzepte der Industrieautomation, d.h. der Steuerung und Überwachung von technischen Prozessen mit Hilfe von Software, beruhen auf der Idee einer zentralen Steuerung mit verteilter Sensor-/Aktorebene. Die Teilnehmer kommunizieren dabei untereinander und mit übergeordneten Systemen über industrielle lokale Netzwerke, im Weiteren auch als Automatisierungsnetzwerke bezeichnet. Die Steuerungsfunktion beruht auf zwei Grundideen, der geographischen Dezentralisierung und der hierarchischen Aufteilung der Steuerungsfunktionen. Die funktionelle Hierarchie teilt die Automatisierungsaufgabe dabei im Wesentlichen in eine Steuerungsebene und eine Sensor-/Aktorebene ein. Die industriellen lokalen Netzwerke sind üblicherweise als sogenannte Master-Slave-Kommunikationsnetze ausgelegt, bei denen der Master-Teilnehmer die Steuerungsebene und die Slave-Teilnehmer die Sensor-/Aktorebene bildet.

Eine wesentliche Anforderung an ein Automatisierungsnetzwerk ist die Fehlersicherheit. Beim Steuern und Überwachen von technischen Prozessen muss sichergestellt sein, dass dann, wenn das Automatisierungsnetzwerk fehlerhaft arbeitet, daraus keine Gefahr für Mensch und Umwelt resultiert. Das Automatisierungsnetzwerk arbeitet in der Regel nach dem sogenannten Fail-Safe-Prinzip, bei dem das Automatisierungsnetzwerk im Fehlerfall in einen sicheren Zustand übergeht.

Um die Gefährdung durch ein Automatisierungsnetzwerk einstufen zu können, ist es Vorschrift, eine Gefahrenanalyse vorzunehmen. Gemäß der europäischen Norm EN 1050 hat die Risikobeurteilung als eine Folge von logischen Schritten zu erfolgen, welche die systematische Untersuchung von Gefährdung erlaubt, die vom Automatisierungsnetzwerk bzw. den einzelnen Teilnehmern ausgehen. Auf der Grundlage der Gefahrenanalyse werden dann die technischen und organisatorischen Anforderungen an das Automatisierungsnetzwerk zur Gewährleistung einer ausreichenden Sicherheit festgelegt.

Im Bereich der Maschinen- und Anlagensicherheit, insbesondere auch von programmierbaren elektronischen Steuerungssystemen, haben sich die Normen EN ISO13849-1 und IEC/EN 62061 als internationaler Standard zur Durchführung einer Gefährdungsanalyse etabliert. Die Normen beziehen alle sicherheitsrelevanten Teilnehmer unabhängig vom Teilnehmertyp mit ein und unterteilen die sicherheitstechnische Leistungsfähigkeit in Kategorien. Ausgehend von der ermittelten Sicherheitskategorie wird dann die Steuerungsstruktur im Automatisierungsnetzwerk festgelegt, um die Anforderungen an die Sicherheitsfunktionen und ein gefordertes Systemverhalten im Fehlerfall zu erreichen.

Die Normen EN ISO 13849-1 und IEC/EN 62061 spezifizieren die zur Risikoreduzierung erforderliche sicherheitstechnische Leistungsfähigkeit von programmierbaren elektronischen Steuerungssystemen. Zur Unterteilung der sicherheitstechnischen Leistungsfähigkeit werden in den beiden Normen Sicherheitsanforderungsstufen definiert. Hierzu werden alle Sicherheitsfunktionen des Automatisierungsnetzwerks mit allen an ihrer Ausführung beteiligten Teilnehmern betrachtet.

Die Norm IEC/EN 62061 gibt vier Sicherheitsanforderungsstufe ("Safety Integrity Level" - SIL) SIL 1 bis SIL4 vor, wobei die einzelnen Stufen durch die zulässige Restfehlerwahrscheinlichkeit für das Auftreten eines Fehlers definiert sind. Die geringsten Anforderungen nach der Norm stellt die Sicherheitsanforderungsstufe SIL1. Von Stufe zu Stufe steigen dann die Anforderungen bis zur Sicherheitsanforderungsstufe SIL4 an. Die Sicherheitsanforderungsstufe des Automatisierungsnetzwerks wird dabei auf der Grundlage von sicherheitstechnischen Kenngrößen der an den Sicherheitsfunktionen beteiligten Teilnehmer bestimmt. Zum Bestimmen der Sicherheitsanforderungsstufe des Automatisierungsnetzwerkes ist ferner neben der Kenntnis der sicherheitstechnischen Kenngrößen aller an der Sicherheitsfunktion beteiligten Teilnehmer eine genaue Information über die logische Verknüpfung der Teilnehmer im Automatisierungsnetzwerk erforderlich. Die Sicherheitsanforderungsstufe wird außerdem wesentlich von der im Automatisierungsnetzwerk eingesetzten Busarchitektur beeinflusst.

Da die Anforderungen an die Teilnehmer in einem Automatisierungsnetzwerk in Bezug auf die Sicherheitsfunktionen oft verschieden sind, werden Automatisierungsnetzwerk in der Regel mit Teilnehmern betrieben werden, die unterschiedliche SIL-Stufe besitzen. Die Sicherheitsanforderungsstufe des Gesamtsystems wird in einem solchen Fall aber durch den Teilnehmer mit der niedrigsten SIL-Stufe bestimmt. Grund hierfür ist, dass in einem Automatisierungsnetzwerk ein Datenverkehr zwischen Teilnehmern mit unterschiedlicher SIL-Stufe zu erheblichen sicherheitstechnischen Problemen führt. Wenn nämlich ein Teilnehmer mit einer niedrigen SIL-Stufe Datenpakete an einen Teilnehmer mit einer hohen SIL-Stufe versendet, kann auch bei Auftreten eines einfachen Fehlers bei der Datenpaket-Erzeugung in dem sendenden Teilnehmer, der im Rahmen der niedrigen SIL-Stufe des sendenden Teilnehmers zulässig ist, eine gültiges Datenpaket für den empfangenden Teilnehmer mit hoher SIL-Stufe erzeugt werden. Der Fehler im übertragenen Datenpaket wird zwar dann im Empfänger aufgrund seiner hohen SIL-Stufe mit großer Wahrscheinlichkeit erkannt. Durch den möglichen Datenverkehr mit dem Teilnehmer, der die niedrige SIL-Stufe besitzt, kann jedoch dann die Erfüllung der im Empfänger geforderten hohen SIL-Stufe nicht mehr gewährleistet werden, da von dem Teilnehmer mit der niedrigen SIL-Stufe ein an sich gültiges Datenpaket gebildet werden kann.

Ferner ist es bei der Erweiterung eines Automatisierungsnetzes mit weiteren sicherheitsrelevanten Teilnehmer, insbesondere dann, wenn deren SIL-Stufe von der SIL-Stufe der anderen Teilnehmer abweichen, in der Regel erforderlich, das Gesamtsystem neu zu konfigurieren, um zu verhindern, dass die von den bereits im Automatisierungssystem vorhandenen Teilnehmern auszuführenden Sicherheitsfunktionen in Konflikt mit den Sicherheitsfunktionen der neu hinzugefügten Teilnehmer kommen. Dabei besteht insbesondere die Gefahr, dass bei der Adressenvergabe neuen Teilnehmern die gleichen Adressen wie alten Teilnehmern zugewiesen werden, was zur Fehlleitungen von Datenpaketen, die dann nicht erfasst werden, führen kann. Die Adressenvergabe ist insbesondere dann aufwendig, wenn die den Teilnehmern zugeordneten Adressen in den Datenpaketen nur impliziert im Rahmen von Sicherheitscodes, die von einem Datensicherungsmechanismus erzeugt werden, übertragen werden und oder von außen nicht ermittelbar sind.

Aus der DE102007028767A1 ist ein Verfahren gemäß dem Oberbegriff des Anspruchs 1 und ein Automatisierungsnetzwerk gemäß dem Oberbegriff des Anspruchs 5 bekannt. Aus der EP0905594A1, DE102010009458A1, der WO2004/097539A1 und der US2003/009610A1 ist weiterer Stand der Technik.

Aufgabe der vorliegenden Erfindung ist es, ein Verfahren zum Betreiben einer Sicherheitssteuerung und ein Automatisierungsnetzwerk bereitzustellen, bei den sich Teilnehmer mit beliebiger Sicherheitsanforderungsstufe ohne eine Beeinträchtigung der Sicherheit über das Automatisierungsnetzwerk verbinden lassen.

Diese Aufgabe wird mit einem Verfahren gemäß Anspruch 1 und einem Automatisierungsnetzwerk gemäß Anspruch 4 gelöst. Bevorzugte Weiterbildungen sind in den abhängigen Ansprüchen angegeben.

Gemäß der Erfindung wird zum Betreiben einer Sicherheitssteuerung auf einem Automatisierungsnetzwerk mit einem die Sicherheitssteuerung ausführenden Master-Teilnehmer, wenigstens einem ersten Slave-Teilnehmer, dem eine erste Sicherheitsanforderungsstufe zugeordnet ist, und wenigstens einem zweiten Slave-Teilnehmer, dem eine zweite Sicherheitsanforderungsstufe zugeordnet ist, wobei der Master-Teilnehmer, der erste Slave-Teilnehmer und der zweite Slave-Teilnehmer über eine Datenübertragungsstrecke miteinander verbunden sind und jeweils eine Sicherheitsschicht und eine Datenübertragungsschicht aufweisen, im Sendebetrieb in der Sicherheitsschicht des jeweiligen Teilnehmers für einen zu sendenden Sicherheitsdatenblock ein Sicherheitscode mithilfe eines Sicherheitscode-Bestimmungsverfahrens bestimmt wird und in der Datenübertragungsschicht des jeweiligen Teilnehmers ein Datenpaket mit dem Sicherheitsdatenblock und dem Sicherheitscode für das Versenden auf der Datenübertragungsstrecke gebildet wird, und im Empfangsbetrieb in der Datenübertragungsschicht des jeweiligen Teilnehmers aus einem über die Datenübertragungsstrecke empfangenen Datenpaket ein Sicherheitsdatenblock und ein zugehöriger Sicherheitscode extrahiert wird und in der Sicherheitsschicht des jeweiligen Teilnehmers mit dem Sicherheitscode-Bestimmungsverfahren der Sicherheitscode für den Sicherheitsdatenblock verifiziert wird. Dem ersten Slave-Teilnehmer ist dabei ein erstes Sicherheitscode-Bestimmungsverfahren und dem zweiten Slave-Teilnehmer ein zweites Sicherheitscode-Bestimmungsverfahren zugeordnet, wobei der Master-Teilnehmer und der ersten Slave-Teilnehmer für einen Austausch eines Sicherheitsdatenblocks das erste Sicherheitscode-Bestimmungsverfahren und der Master-Teilnehmer und der zweite Slave-Teilnehmer für einen Austausch eines Sicherheitsdatenblocks das zweiten Sicherheitscode-Bestimmungsverfahren verwenden.

Erfindungsgemäß wird für die Kommunikation zwischen Teilnehmern im Automatisierungsnetzwerk mit gleicher Sicherheitsanforderungsstufe je ein eigenes Sicherheitscode-Bestimmungsverfahren verwendet. Eine gegenseitige unerkannte Beeinflussung insbesondere von Teilnehmern mit unterschiedlicher Sicherheitsanforderungsstufe wird so ausgeschlossen. Eine Fehlleitung von Datenpaketen im Datenverkehr zwischen Teilnehmern mit unterschiedlicher Sicherheitsanforderungsstufe wird zuverlässig erkannt. Im Automatisierungsnetzwerk ist so auch ein Datenverkehr zwischen Teilnehmern mit beliebiger Sicherheitsanforderungsstufe ohne sicherheitstechnische Probleme möglich.

Gemäß einer bevorzugten Ausführungsform ist das erste und zweite Sicherheitscode-Bestimmungsverfahren ein zyklisches Redundanzprüfverfahren, wobei dem ersten Sicherheitscode-Bestimmungsverfahren ein erstes Sicherheitscode-Generatorpolynom und dem zweiten Sicherheitscode-Bestimmungsverfahren ein zweites Sicherheitscode-Generatorpolynom zugeordnet ist. Dabei unterscheidet sich der Hamming-Abstand des ersten Sicherheitscode-Generatorpolynoms vorzugsweise von dem Hamming-Abstand des zweiten Sicherheitscode-Generatorpolynoms. Mit dieser Vorgehensweise besteht die Möglichkeit, für beide Sicherheitscode-Bestimmungsverfahren den augenblicklichen Standard-Sicherheitsmechanismus zyklische Redundanzprüfung einzusetzen, sodass auf zusätzliche zeitraubende Sicherheitsmaßnahmen, die darüber hinaus zusätzliche Hard- und Software nötig machen, verzichtet werden kann. Durch die Einstellung des Hamming-Abstands des ersten und zweiten Sicherheitscode-Generatorpolynoms kann für die für die jeweilige Sicherheitsanforderungsstufe geforderte Aufdeckwahrscheinlichkeit von Fehlern im Datenpaket gesorgt werden.

Gemäß einer bevorzugten Ausführungsform kann die Auslegung des Automatisierungsnetzwerkes für die Teilnehmer mit der ersten Sicherheitsanforderungsstufe vollkommen getrennt von der Auslegung des Automatisierungsnetzwerkes für die Teilnehmer mit der zweiten Sicherheitsanforderungsstufe erfolgen. In beiden Netzwerkbereichen können dann gleiche Adressen verwendet werden, ohne dass es zu Fehlleitungen im Datenverkehr kommt, da jedem Netzwerkbereich ein unabhängiges Sicherheitscodebestimmungsverfahren zugeordnet ist, das eine solche Fehlleitung verhindert.

Die Erfindung wird anhand der beigefügten Zeichnungen näher erläutert.
Figur 1 zeigt schematisch den Aufbau eines erfindungsgemäßen Automatisierungsnetzwerkes mit einem eine Sicherheitssteuerung ausführenden Master-Teilnehmer, einem ersten Slave-Teilnehmer, dem eine erste Sicherheitsanforderungsstufe zugeordnet ist, und einem zweiten Slave-Teilnehmer, dem eine zweite Sicherheitsanforderungsstufe zugeordnet ist.
Figur 2 zeigt eine mögliche Auslegung der Datenübertragung bei dem in Figur 1 gezeigten Automatisierungssystem.
Figur 3 zeigt die Restfehlerrate und den Hamming-Abstand für Generatorpolynome, die den Sicherheitsanforderungsstufen SIL 1 bis SIL3 eingesetzt werden.

In der Industrieautomation werden Netzwerke verwendet, bei denen die dezentral angeordneten Geräte einer Sensor-/ Aktorebene wie E/A-Module, Messwerterfasser, Ventile, Antriebe etc. über ein leistungsfähiges Bussystem mit einem Automatisierungsrechner einer Steuerungsebene kommunizieren. Als Bussysteme werden in Automatisierungsnetzwerken vorzugsweise Feldbussysteme eingesetzt.

Automatisierungsnetzwerke sind in der Regel hierarchisch aufgebaut und arbeiten nach dem Master-Slave-Prinzip. Die Master-Teilnehmer sind der Steuerungsebene zugeordnet und stellen die aktiven Teilnehmer dar, die eine Zugriffsberechtigung auf die Kommunikationsverbindung im Automatisierungsnetzwerk haben und den Datenverkehr bestimmen. Die Slave-Teilnehmer sind Teil der Sensor-/ Aktorebene und bilden die passiven Teilnehmer. Sie haben keine eigene Zugriffsberechtigung auf das Bussystem und dürfen empfangene Daten nur quittieren oder auf Anfrage eines Master-Teilnehmers Daten an diesen übermitteln.

Eine zentrale Anforderung an Automatisierungssysteme ist die sichere und zuverlässige Datenübertragung. Um Gefahren für Mensch und Umwelt auszuräumen, muss sichergestellt sein, dass die Nutzdaten zwischen den Slave-Teilnehmern der Sensor-/ Aktorebene und den Master-Teilnehmern der Steuerungsebene fehlerfrei übertragen oder alternativ Fehler bei der Datenübertragung zuverlässig erkannt werden. In Automatisierungssystemen sind deshalb Sicherungsmaßnahmen, sogenannte Safety-Maßnahmen, implementiert, die gewährleisten, dass Fehler bei der Datenübertragung mit hoher Wahrscheinlichkeit aufgedeckt werden, um so die Gefahr unerkannter Fehler zu minimieren. Die zu übertragenden Daten werden deshalb vom sendenden Teilnehmer mit einem Sicherheitscode versehen, der vom empfangenen Teilnehmer dann verifiziert wird. Als Verfahren zum Bestimmen des Sicherheitscodes wird in der Regel das zyklische Redundanzprüfverfahren, auch CRC-Verfahren genannt, eingesetzt.

Bei dem CRC-Verfahren wird vor einer Datenübertragung im Sender für den zu übertragenden Datenblock mithilfe eines Generatorpolynoms eine Prüfzeichenfolge ermittelt, die dann an den Datenblock angehängt und zusammen mit diesen an den Empfänger übermittelt wird. Vom Empfänger wird mithilfe desselben Generatorpolynoms, das vom Sender zum Berechnen der Prüfzeichenfolge für das übertragene Datenpaket eingesetzt wurde, die übertragene Prüfzeichenfolge verifiziert, um festzustellen, ob die Datenübertragung unverfälscht stattgefunden hat.

Im Allgemeinen sind nicht alle Teilnehmer im Automatisierungsnetzwerk gleich sicherheitsrelevant. Auch ist die Anzahl der Sicherheitsfunktionen in einem Automatisierungsnetzwerk in der Regel geringer als die Anzahl der nicht sicherheitsrelevanten Steuerungsfunktionen.

Um die Gefährdung für Mensch und Umwelt durch das Automatisierungsnetzwerk einzustufen, ist es Vorschrift, eine Gefahrenanalyse durchzuführen. Die zentrale Norm ist die IEC/EN 62061, die die zur Risikoreduzierung erforderliche sicherheitstechnische Leistungsfähigkeit von programmierbaren elektronischen Steuerungssystemen spezifiziert. Zur Unterteilung der sicherheitstechnischen Leistungsfähigkeit sind in der Norm IEC/EN 62061 vier Sicherheitsanforderungsstufen (Safety Integrity Level - SIL, SIL1 bis SIL4) definiert. Die einzelnen Sicherheitsanforderungsstufen legen dabei die zulässige Restfehlerwahrscheinlichkeit für das Auftreten eines Fehlers fest. Gemäß Sicherheitsanforderungsstufe SIL1 darf die mittlere Wahrscheinlichkeit eines gefährlichen Ausfalls pro Stunde (PFH_{D}) kleiner als 10⁻⁵, muss aber größer als 10⁻⁶ sein. Für die Sicherheitsanforderungsstufe SIL2 ist der Wertebereich kleiner als 10⁻⁶ aber größer als 10⁻⁷, für die Sicherheitsanforderungsstufe SIL3 kleiner als 10⁻⁷, aber größer als 10⁻⁸ und für die Sicherheitsanforderungsstufe SIL4 kleiner als 10⁻⁸, aber größer als 10⁻⁹. Neben der Norm IEC/EN 62061 kommt auch oft die einfacher anzuwendende Norm EN ISO 13849, die die Performance-Level A bis E kennt, zum Einsatz.

Die für die einzelnen Teilnehmer geforderte Sicherheitsanforderung im Automatisierungsnetzwerk hängt von den dem jeweiligen Teilnehmer zugeordneten Sicherheitsfunktionen ab. Automatisierungsnetzwerke werden deshalb oft mit Teilnehmern betrieben, die aufgrund ihrer Sicherheitsfunktionen unterschiedliche Sicherheitsanforderungen aufweisen.

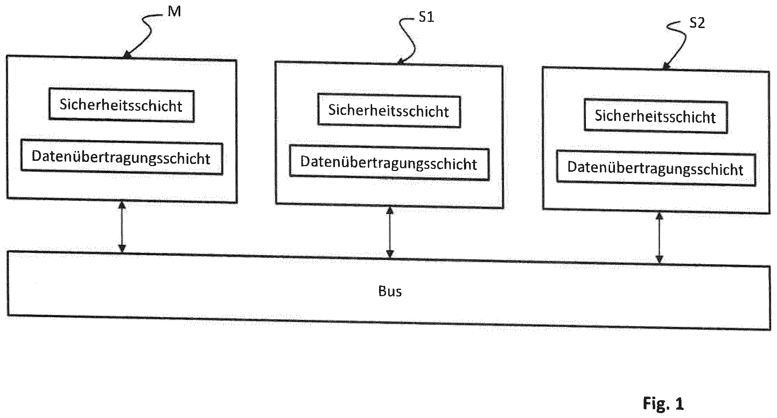

Figur 1 zeigt schematisch die Grundstruktur eines Automatisierungsnetzwerks mit einem Master-Teilnehmer M, der die Steuerungsebene bildet und zwei Slave-Teilnehmer S1 und S2, die die Sensor-/ Aktorebene repräsentieren. Der Master-Teilnehmer M und die zwei Slave-Teilnehmer S1, S2 sind über einen seriellen Bus miteinander verbunden, über den der Datenverkehr zwischen den Teilnehmern stattfindet. Der Datenverkehr im Automatisierungsnetzwerk wird dabei vom Master-Teilnehmer M in Form von Datenpaketen organisiert, die sich aus Steuerdaten und Nutzdaten zusammensetzen, wobei die Steuerdaten im Datenpaket eine Adresseninformation enthalten, das den Sender bzw. Empfänger identifiziert.

Bei dem in Figur 1 gezeigten Automatisierungsnetzwerk sind beide Slave-Teilnehmer S1 und S2 sicherheitsrelevant. Es können natürlich mehr als zwei sicherheitsrelevante Slave-Teilnehmer vorgesehen sein. Auch können im Automatisierungsnetzwerk neben sicherheitsrelevanten Teilnehmern nicht sicherheitsrelevante Teilnehmer eingebunden werden. Die Steuerungsebene im Automatisierungsnetzwerk kann auch auf mehrere Master-Teilnehmer aufteilt sein.

Die Datenübertragung im Automatisierungsnetzwerk wird in der Regel einheitlich, vorzugsweise auf Grundlage des Ethernet-Protokolls ausgeführt, wobei alle sicherheitsrelevanten Teilnehmer im Automatisierungssystem, das heißt der Master-Teilnehmer M und die beiden Slave-Teilnehmer S1, S2 neben der Datenübertragungsschicht zum Verarbeiten der Standarddaten eine weitere übergeordnete Sicherheitsschicht zur Verarbeitung der Sicherheitsdaten aufweisen. Die Sicherheitsschicht und die Datenübertragungsschicht sind in den sicherheitsrelevanten Teilnehmern vollständig voneinander abgekapselt, um die Gefahr der Verfälschung bei der Verarbeitung von Sicherheitsdaten zu verhindern. Mit dieser Auslegung der sicherheitsrelevanten Teilnehmer kann der Hard- und Softwareaufwand reduziert werden, da sowohl Sicherheitsdaten als auch Standardnutzdaten mithilfe eines Standardprotokolls wie dem Ethernet-Protokoll übertragen werden können.

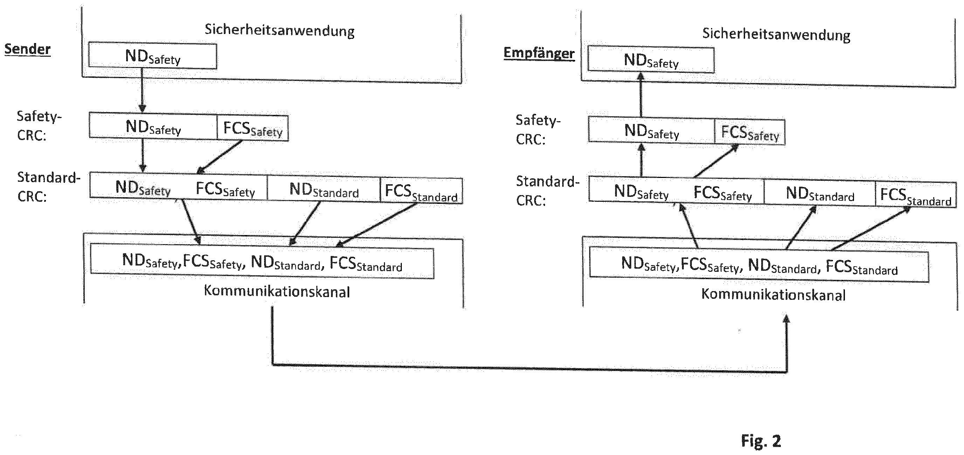

Figur 2 zeigt eine Datenübertragung bei dem in Figur 1 gezeigten Automatisierungssystem. In der Sicherheitsschicht des Senders wird mithilfe eines Sicherheitscode-Bestimmungsverfahren Safety CRC ein Sicherheitscode FCS_{Safety} für einen zu sendenden Sicherheitsdatenblock ND_{Safety} erzeugt. Wenn als Sicherheitscode-Bestimmungsverfahren Safety CRC, wie in Figur 2 gezeigt, das zyklische Redundanzprüfungsverfahren eingesetzt wird, wird unter Verwendung eines Sicherheitsdaten-Generatorpolynoms der Sicherheitscode als Sicherheitsdatenblock-Prüfzeichenfolge ermittelt. Der Sicherheitscode FCS-_{Safety} wird dann an den Sicherheitsdatenblock ND_{Safety} angehängt und in Form eines Sicherheitsblocks an die Datenübertragungsschicht übergeben.

In der Datenübertragungsschicht des Senders wird anschließend das Sicherheitsblock in einem Standarddatenblock ND_{Standard} eingebettet, wobei vorzugsweise mithilfe eines weiteren Sicherheitscode-Bestimmungsverfahrens Standard CRC ein weiterer Sicherheitscode FCS_{Standard} ermittelt wird. Wenn als Sicherheitscode-Bestimmungsverfahren Standard CRC wiederum, wie in Figur 2 gezeigt, das zyklische Redundanzprüfungsverfahren eingesetzt wird, wird ein gegenüber dem zur Berechnung der Sicherheitsdatenblock-Prüfzeichenfolge eingesetzten Sicherheitsdaten-Generatorpolynom verändertes Standarddaten-Generatorpolynom verwendet.

Die Datenübertragungsschicht versendet dann den Standarddatenpaketblock ND_{Standard} mit eingebettetem Sicherheitsdatenblock ND_{Safety} und Sicherheitscode FCS_{Safety} und angehängter Standarddatenblock-Prüfzeichenfolge FCS_{Standard} und überträgt diesen über den Bus Communication Channel zum Empfänger. Im Empfänger werden dann, wie in Figur 2 gezeigt, wiederum zwei zyklische Redundanzprüfungen durchgeführt. In der Datenübertragungsschicht des Empfängers wird die Standarddatenblock-Prüfzeichenfolge FCS_{Standard} des übertragenen Datenpakets mithilfe der zyklischen Redundanzprüfung Standard CRC unter Verwendung des Standarddaten-Generatorpolynoms verifiziert. Anschließend wird dann in der Sicherheitsschicht des Empfängers eine weitere Verifizierung der Sicherheitsdatenblock-Prüfzeichenfolge FCS_{Safety} des im übertragenen Datenpaket eingebetteten Sicherheitsdatenpakets mithilfe der zyklischen Redundanzprüfung Safety CRC unter Verwendung des Sicherheitsdaten-Generatorpolynoms vorgenommen. Falls beide Überprüfungen zu einem positiven Ergebnis führen, können die Sicherheitsdaten verwendet werden. Andernfalls werden sie verworfen. Der Empfänger wartet dann auf ein weiteres Datenpaket, verwendet Ersatzdaten oder führt Sicherheitsmaßnahmen durch.

Das Sicherheitsdaten-Generatorpolynom erzeugt dabei vorzugsweise eine Sicherheitsdatenblock-Prüfzeichenfolge der Länge R. Als Sicherheitsdaten-Generatorpolynom wird dann vorzugsweise ein Generatorpolynom eingesetzt, dessen Hamming-Abstand sich einer fiktiven Berechnung einer Prüfzeichenfolge für den Standarddatenblock gegenüber dem Hamming-Abstand für die Prüfzeichenfolge für den um R längeren Sicherheitsdatenblock unterscheidet. Mit dieser Vorgehensweise wird gewährleistet, dass Verfälschungen in der Sicherheitsdatenblock-Zeichenfolge zuverlässig nachgewiesen werden können, auch dann, wenn wie bei dem in Figur 1 gezeigten Automatisierungssystem vorgesehen, die Sicherheitsschicht und die Datenübertragung im sicherheitsrelevanten Teilnehmer voneinander getrennt sind.

Wenn in einem Automatisierungsnetzwerk sicherheitsrelevante Teilnehmer unterschiedlichen Sicherheitsanforderungsstufen zugeordnet sind, kann es beim Datenverkehr zu erheblichen sicherheitstechnischen Problemen kommen. Im in Figur 1 gezeigten Automatisierungsnetzwerk erfüllt der Slave-Teilnehmer S1 die Sicherheitsanforderungsnorm SIL3, während der Slave-Teilnehmer S2 die Sicherheitsanforderungsnorm SIL2 erfüllt. Wenn der Slave-Teilnehmer S2 mit der niedrigen SIL-Stufe 2 Datenpakete erzeugt, kann bei dem Auftreten eines einfachen Fehlers in diesem Slave-Teilnehmer, der im Rahmen der niedrigen SIL-Stufe 2 im Slave-Teilnehmer zulässig ist, ein gültiges Datenpaket für den Slave-Teilnehmer S1 mit der höheren SIL-Stufe 3 erzeugt werden. Der Slave-Teilnehmer S1 würde zwar den Fehler im übertragenen Datenpaket vom Slave-Teilnehmer S2 mit hoher Wahrscheinlichkeit feststellen. Die für den Slave-Teilnehmer S1 geforderte hohe SIL-Stufe 3 wird aufgrund der dann jedoch auftretenden hohen Fehlerrate nicht mehr eingehalten.

Dieses Problem wird erfindungsgemäß dadurch vermieden, dass der Teilnehmer, dem eine erste Sicherheitsanforderungsstufe zugeordnet ist, für den Austausch von Datenpaketen ein erstes Sicherheitscode-Bestimmungsverfahren und der Teilnehmer, dem eine zweiten Sicherheitsanforderungsstufe zugeordnet ist, für den Austausch von Datenpaketen ein zweites Sicherheitscode-Bestimmungsverfahren verwendet. Im Falle dass als Sicherheitscode-Bestimmungsverfahren immer ein zyklisches Redundanzprüfungsverfahren eingesetzt wird, werden unterschiedliche Sicherheitscode-Generatorpolynome für die Teilnehmer mit den unterschiedlichen Sicherheitsanforderungen eingesetzt. Mit dieser Vorgehensweise können Fehlleitungen bei der Datenübertragung zuverlässig aufgedeckt werden, da der Datenverkehr zwischen den Teilnehmergruppen mit den unterschiedlichen Sicherheitsanforderungen mithilfe der unterschiedlichen Sicherheitscodes eindeutig voneinander abgegrenzt werden kann.

Bei dem in Figur 1 gezeigten Automatisierungssystem wird so vorgegangen, dass der Master-Teilnehmer M und der Slave-Teilnehmer S1 für den Datenaustausch ein erstes, für die Sicherheitsanforderungsstufe SIL3 geeignetes Generatorpolynom nutzen. Für den Datenaustausch mit dem zweiten Slave-Teilnehmer S2, dessen Sicherheitsanforderungsstufe SIL2 ist, nutzt der Master-Teilnehmer M und der Slave-Teilnehmer S2 dagegen ein anderes, für die Sicherheitsanforderungsstufe SIL2 geeignetes Generatorpolynom.

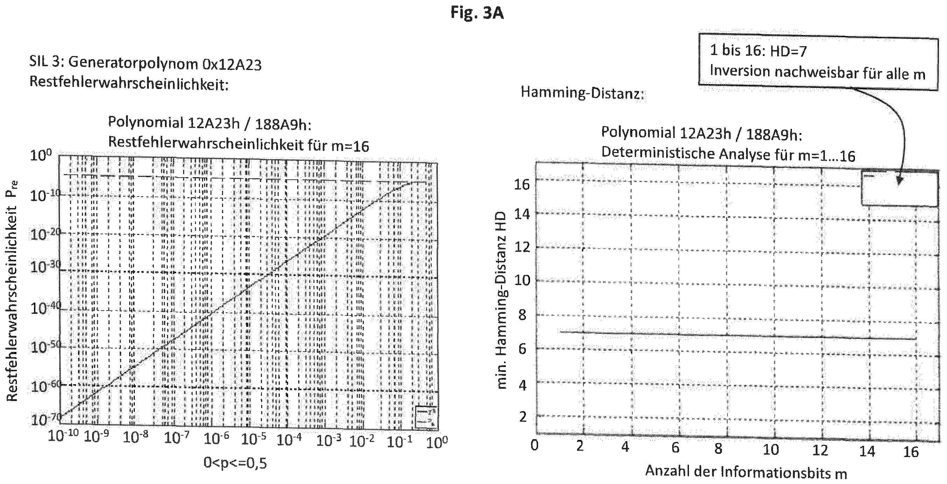

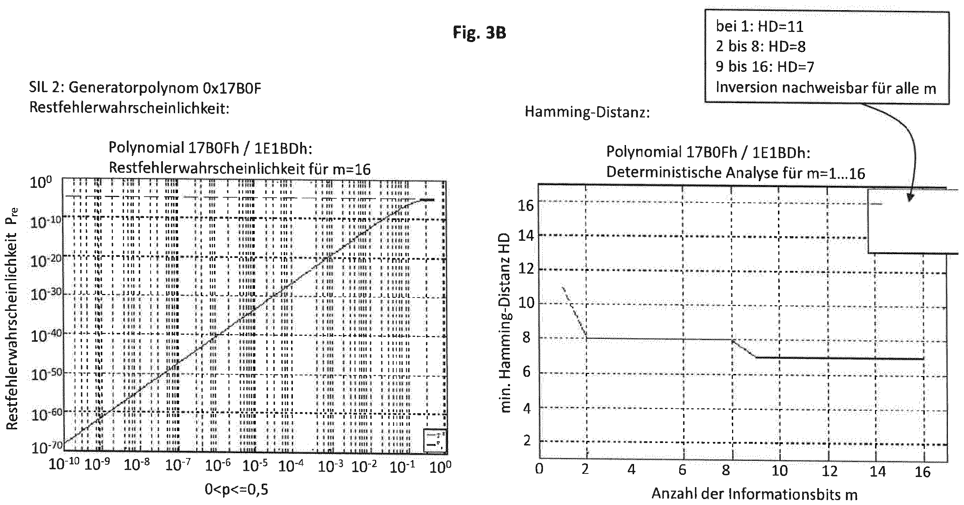

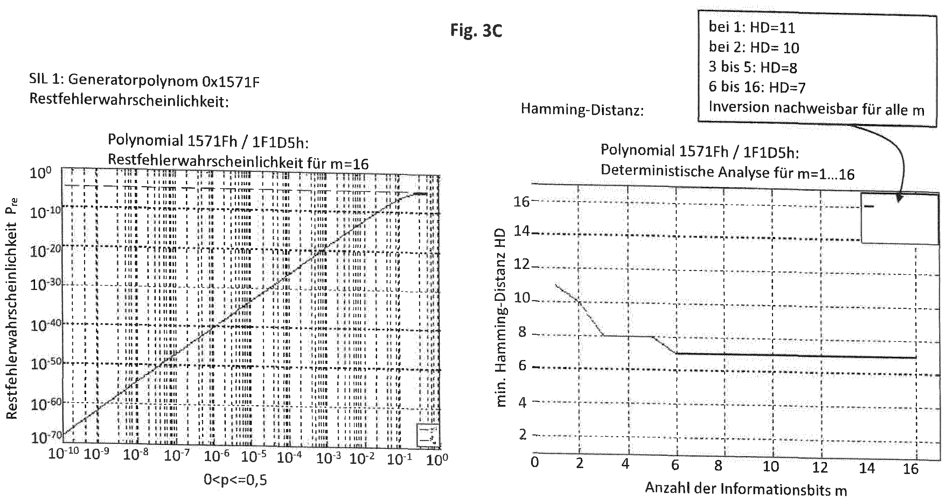

Figur 3 zeigt beispielhaft drei unterschiedliche Generatorpolynome die jeweils einer der Sicherheitsanforderungsstufen SIL1, SIL2 und SIL3 zugeordnet sind. Als Generatorpolynom für die SIL-Stufe 3 wird 0x12A23, als Generatorpolynom für die SIL-Stufe 2 wird 0x17B0F und als Generatorpolynom für die SIL-Stufe 1 wird 0x1571F eingesetzt. Für die einzelnen Generatorpolynome sind dabei jeweils der Hamming-Abstand sowie die Restfehlerwahrscheinlichkeit angegeben. Der Hamming-Abstand gibt dabei an, wie viele Zeichen in einem Datensatz mindestens verfälscht sein müssen, damit trotz der eingesetzten Safety-Maßnahme der zyklischen Redundanzprüfung eine unerkannte Verfälschung auftreten kann. Die Auswahl der Generatorpolynome erfolgt dabei so, der Hamming-Abstand des Generatorpolynoms die gemäß der Sicherheitsanforderungsstufe geforderte Restfehlerwahrscheinlichkeit für das Auftreten eines Fehlers erfüllt. Dabei wird grundsätzlich so vorgegangen, dass, wenn den Sicherheitsanforderungsstufe unterschiedliche Restfehlerwahrscheinlichkeiten für das Auftreten eines Fehlers zugeordnet sind, der Hamming-Abstand der zugeordneten Generatorpolynome sich unterscheidet.

Die Zuordnung unterschiedlicher Sicherheitscode-Bestimmungsverfahren zu verschiedenen Teilnehmergruppen im Automatisierungsnetzwerk, die jeweils eine Sicherheitsanforderungsstufe repräsentieren, ermöglicht es auch, auf einfache Weise das Automatisierungsnetzwerk zu erweitern. Im Falle, dass eine neue Gruppe von Slave-Teilnehmer mit einer zugeordneten Sicherheitsanforderungsstufe an das Automatisierungsnetzwerk angebunden werden soll, wird der hinzugefügten Gruppe ein eigenständiges Sicherheitscode-Bestimmungsverfahren zum Datenaustausch untereinander und mit den Master-Teilnehmern zugeordnet. Mit dieser Vorgehensweise ist es nicht mehr erforderlich, bei der Konfiguration der neuen Gruppe von Slave-Teilnehmer im Automatisierungsnetzwerk die übrigen Slave-Teilnehmer zu berücksichtigen, da die verschiedenen Gruppen von Teilnehmern, den jeweils eine Sicherheitsanforderungsstufe zugeordnet ist, mithilfe der getrennten Sicherheitscode-Bestimmungsverfahren den Datenverkehr unabhängig voneinander ausführen. Nur der Master-Teilnehmer muss mit allen Teilnehmergruppen sprechen und für den Datenpaket-Austausch mit der jeweiligen Teilnehmergruppe das dafür vorgesehene Sicherheitscode-Bestimmungsverfahren durchführen können.

Durch das Zuordnen unterschiedlicher Sicherheitscode-Bestimmungsverfahren zu Teilnehmergruppen, die durch ihre Sicherheitsanforderungsstufen voneinander abgegrenzt sind, besteht ferner die Möglichkeit, die Adressen an die Teilnehmer der jeweiligen Sicherheitsgruppen unabhängig voneinander zu vergeben. Durch das Ausführen jeweils eigenständiger Sicherheitscode-Bestimmungsverfahren können dann die Teilnehmer in den verschiedenen Gruppen zum Beispiel auch gleiche Adressen aufweisen, da eine Datenpaket-Fehlleitung durch die separaten Sicherheitscode-Bestimmungsverfahren zuverlässig verhindert wird. Dies ist insbesondere dann vorteilhaft, wenn wie bei der in Figur 2 gezeigten Auslegung der Sicherheitsdatenblock gekapselt im Standarddatenblock übertragen wird und die Adresse im Sicherheitsdatenblock nicht mehr explizit vorliegt, sondern nur in die Prüfzeichenfolge einfließt. Bei der erfindungsgemäßen Adressenvergabe ist nur erforderlich, dass die Teilnehmer innerhalb einer Sicherheitsanforderungsstufe eine eindeutige Adresse besitzen.

## Patentansprüche

1. Verfahren zum Betreiben einer Sicherheitssteuerung auf einem Automatisierungsnetzwerk mit einem die Sicherheitssteuerung ausführenden Master-Teilnehmer (M), wenigstens einem ersten Slave-Teilnehmer (S1) und einem zweiten Slave-Teilnehmer (S2),
wobei der Master-Teilnehmer (M), der erste Slave-Teilnehmer (S1) und der zweite Slave-Teilnehmer (S2) über eine Datenübertragungsstrecke (Bus) miteinander verbunden sind und jeweils eine Sicherheitsschicht und eine Datenübertragungsschicht aufweisen,
wobei im Sendebetrieb die Sicherheitsschicht für einen zu sendenden Sicherheitsdatenblock eine Sicherheitscode mithilfe eines Sicherheitscode-Bestimmungsverfahrens bestimmt und die Datenübertragungsschicht ein Datenpaket mit dem Sicherheitsdatenblock und dem Sicherheitscode für das Versenden auf der Datenübertragungsstrecke bildet,
wobei im Empfangsbetrieb die Datenübertragungsschicht aus einem über die Datenübertragungsstrecke empfangenen Datenpaket einen Sicherheitsdatenblock und einen zugehörigen Sicherheitscode extrahiert und die Sicherheitsschicht mit dem Sicherheitscode-Bestimmungsverfahren den Sicherheitscode für den Sicherheitsdatenblock verifiziert,
wobei der Master-Teilnehmer und der ersten Slave-Teilnehmer und der zweite Slave-Teilnehmer bei einem Austausch von Sicherheitsdatenblocks Sicherheitscodes verwenden,
wobei dem ersten Slave-Teilnehmer (S1) eine erste Sicherheitsanforderungsstufe und dem zweiten Slave-Teilnehmer (S2) eine zweite Sicherheitsanforderungsstufe zugeordnet ist, wobei die erste Sicherheitsanforderungsstufe und die zweite Sicherheitsanforderungsstufe sich unterscheiden,
wobei ein Sicherheitscode von dem ersten Slave-Teilnehmer (S1) mit einem ersten Sicherheitscode-Bestimmungsverfahren und von dem zweiten Slave-Teilnehmer (S2) mit einem zweiten Sicherheitscode-Bestimmungsverfahren ermittelt wird, wobei das erste Sicherheitscode-Bestimmungsverfahren und das zweite Sicherheitscode-Bestimmungsverfahren sich unterscheiden, und wobei der Master-Teilnehmer (M) und der ersten Slave-Teilnehmer (S1) für einen Austausch von Sicherheitsdatenblocks das erste Sicherheitscode-Bestimmungsverfahren und der Master-Teilnehmer (M) und der zweite Slave-Teilnehmer (S2) für einen Austausch von Sicherheitsdatenblocks das zweiten Sicherheitscode-Bestimmungsverfahren verwenden,
**dadurch gekennzeichnet, dass**
der Datenverkehr vom Master-Teilnehmer (M) in Form von Datenpaketen organisiert wird, die sich aus Steuerdaten und Nutzdaten zusammensetzen, wobei die Steuerdaten im Datenpaket eine Adresseninformation enthalten, die den Sender bzw. Empfänger identifiziert, wobei eine Adressenvergabe für den wenigstens ersten Slave-Teilnehmer (S1) mit der ersten Sicherheitsanforderungsstufe und den wenigstens zweiten Slave-Teilnehmer (S2) mit der zweiten Sicherheitsanforderungsstufe unabhängig voneinander erfolgt.

2. Verfahren nach Anspruch 1, wobei das ersten und zweiten Sicherheitscode-Bestimmungsverfahren eine zyklische Redundanzprüfung durchführen, wobei dem ersten Sicherheitscode-Bestimmungsverfahren ein erstes Sicherheitscode-Generatorpolynom und dem zweiten Sicherheitscode-Bestimmungsverfahren ein zweites Sicherheitscode-Generatorpolynom zugeordnet ist, wobei der Master-Teilnehmer (M) und der ersten Slave-Teilnehmer (S1) für einen Austausch eines Sicherheitsdatenblocks das erste Sicherheitscode-Generatorpolynom für die zyklische Redundanzprüfung und der Master-Teilnehmer und der zweite Slave-Teilnehmer (S2) für einen Austausch eines Sicherheitsdatenblocks das zweiten Sicherheitscode-Generatorpolynom für die zyklische Redundanzprüfung verwenden.

3. Verfahren nach Anspruch 2, wobei der ersten und zweiten Sicherheitsanforderungsstufe unterschiedliche Restfehlerwahrscheinlichkeiten für das Auftreten eines Fehlers zugeordnet sind und wobei der Hamming-Abstand des ersten Sicherheitscode-Generatorpolynoms sich von dem Hamming-Abstand des zweiten Sicherheitscode-Generatorpolynoms unterscheidet.

4. Automatisierungsnetzwerk mit einem eine Sicherheitssteuerung ausführenden Master-Teilnehmer (M), wenigstens einem ersten Slave-Teilnehmer (S1) und einem zweiten Slave-Teilnehmer (S2),
wobei der Master-Teilnehmer (M), der erste Slave-Teilnehmer (S1) und der zweite Slave-Teilnehmer (S2) über eine Datenübertragungsstrecke (Bus) miteinander verbunden sind und jeweils eine Sicherheitsschicht und eine Datenübertragungsschicht aufweisen,
wobei im Sendebetrieb die Sicherheitsschicht für einen zu sendenden Sicherheitsdatenblock mit einem Sicherheitscode-Bestimmungsverfahren einen Sicherheitscode bestimmt und die Datenübertragungsschicht ein Datenpaket mit dem Sicherheitsdatenblock und dem Sicherheitscode für das Versenden auf der Datenübertragungsstrecke bildet,
wobei im Empfangsbetrieb die Datenübertragungsschicht aus einem über die Datenübertragungsstrecke empfangenen Datenpaket einen Sicherheitsdatenblock und einen zugehörigen Sicherheitscode extrahiert und die Sicherheitsschicht mit dem Sicherheitscode-Bestimmungsverfahren den Sicherheitscode für den Sicherheitsdatenblock verifiziert, und
wobei der Master-Teilnehmer und der ersten Slave-Teilnehmer und der zweite Slave-Teilnehmer für einen Austausch von Sicherheitsdatenblocks Sicherheitscodes verwenden,
wobei dem ersten Slave-Teilnehmer (S1) eine erste Sicherheitsanforderungsstufe und dem zweiten Slave-Teilnehmer (S2) eine zweite Sicherheitsanforderungsstufe zugeordnet ist, wobei die erste Sicherheitsanforderungsstufe und die zweite Sicherheitsanforderungsstufe sich unterscheiden,
wobei ein Sicherheitscode von dem ersten Slave-Teilnehmer (S1) mit einem ersten Sicherheitscode-Bestimmungsverfahren und von dem zweiten Slave-Teilnehmer (S2) mit einem zweiten Sicherheitscode-Bestimmungsverfahren ermittelt wird, wobei das erste Sicherheitscode-Bestimmungsverfahren und das zweite Sicherheitscode-Bestimmungsverfahren sich unterscheiden, und wobei der Master-Teilnehmer (M) und der ersten Slave-Teilnehmer (S1) für einen Austausch von Sicherheitsdatenblocks das erste Sicherheitscode-Bestimmungsverfahren und der Master-Teilnehmer (M) und der zweite Slave-Teilnehmer (S2) für einen Austausch von Sicherheitsdatenblocks das zweiten Sicherheitscode-Bestimmungsverfahren verwenden
**dadurch gekennzeichnet, dass**
der Master-Teilnehmer (M) den Datenverkehr in Form von Datenpaketen organisiert, die sich aus Steuerdaten und Nutzdaten zusammensetzen, wobei die Steuerdaten im Datenpaket eine Adresseninformation enthalten, die den Sender bzw. Empfänger identifiziert, wobei eine Adressenvergabe für den wenigstens ersten Slave-Teilnehmer (S1) mit der ersten Sicherheitsanforderungsstufe und den wenigstens zweiten Slave-Teilnehmer (S2) mit der zweiten Sicherheitsanforderungsstufe unabhängig voneinander erfolgt.

5. Automatisierungsnetzwerk nach Anspruch 4, wobei das ersten und zweiten Sicherheitscode-Bestimmungsverfahren eine zyklische Redundanzprüfung durchführen, wobei dem ersten Sicherheitscode-Bestimmungsverfahren ein erstes Sicherheitscode-Generatorpolynom und dem zweiten Sicherheitscode-Bestimmungsverfahren ein zweites Sicherheitscode-Generatorpolynom zugeordnet ist,
wobei der Master-Teilnehmer (M) und der ersten Slave-Teilnehmer (S1) für einen Austausch eines Sicherheitsdatenblocks das erste Sicherheitscode-Generatorpolynom für die zyklische Redundanzprüfung und der Master-Teilnehmer und der zweite Slave-Teilnehmer (S2) für einen Austausch eines Sicherheitsdatenblocks das zweiten Sicherheitscode-Generatorpolynom für die zyklische Redundanzprüfung verwenden.

6. Automatisierungsnetzwerk nach Anspruch 5, wobei der ersten und zweiten Sicherheitsanforderungsstufe unterschiedliche Restfehlerwahrscheinlichkeiten für das Auftreten eines Fehlers zugeordnet sind und wobei der Hamming-Abstand des ersten Sicherheitscode-Generatorpolynoms sich von dem Hamming-Abstand des zweiten Sicherheitscode-Generatorpolynoms unterscheidet.

7. Automatisierungsnetzwerk nach einem der Ansprüche 4 bis 6, wobei die Datenübertragungsstrecke ein Ethernet-basierender Feldbus ist.

## Claims

1. Method for operating safety control in an automation network having a master subscriber (M) carrying out the safety control, at least one first slave subscriber (S1) and one second slave subscriber (S2),
wherein the master subscriber (M), the first slave subscriber (S1) and the second slave subscriber (S2) are connected to one another via a data transmission path (Bus) and each have a safety layer and a data link layer, wherein, during transmitting operation, the safety layer determines a safety code with the aid of a safety code determination method for a safety data block to be transmitted, and the data link layer forms a data packet containing the safety data block and the safety code for transmission on the data transmission path, wherein, during receiving operation, the data link layer extracts a safety data block and an associated safety code from a data packet received via the data transmission path, and the safety layer verifies the safety code for the safety data block using the safety code determination method,
wherein the master subscriber and the first slave subscriber and the second slave subscriber use safety codes when interchanging safety data blocks,
wherein a first safety requirement level is assigned to the first slave subscriber (S1) and a second safety requirement level is assigned to the second slave subscriber (S2), wherein the first safety requirement level and the second safety requirement level differ, wherein a safety code is determined by the first slave subscriber (S1) using a first safety code determination method and is determined by the second slave subscriber (S2) using a second safety code determination method, wherein the first safety code determination method and the second safety code determination method differ, and wherein the master subscriber (M) and the first slave subscriber (S1) use the first safety code determination method for interchanging safety data blocks, and the master subscriber (M) and the second slave subscriber (S2) use the second safety code determination method for interchanging safety data blocks,
**characterized in that**
the data traffic is organized by the master subscriber (M) in the form of data packets which are composed of control data and useful data, wherein the control data in the data packet contain an item of address information which identifies the transmitter or receiver, wherein address allocation for the at least first slave subscriber (S1) with the first safety requirement level and for the at least second slave subscriber (S2) with the second safety requirement level is carried out independently of one another.

2. Method according to Claim 1, wherein the first and second safety code determination methods carry out a cyclic redundancy check, wherein a first safety code generator polynomial is assigned to the first safety code determination method and a second safety code generator polynomial is assigned to the second safety code determination method,
wherein the master subscriber (M) and the first slave subscriber (S1) use the first safety code generator polynomial for the cyclic redundancy check for interchanging a safety data block, and the master subscriber and the second slave subscriber (S2) use the second safety code generator polynomial for the cyclic redundancy check for interchanging a safety data block.

3. Method according to Claim 2, wherein different residual error probabilities for the occurrence of an error are assigned to the first and second safety requirement levels, and wherein the Hamming distance of the first safety code generator polynomial differs from the Hamming distance of the second safety code generator polynomial.

4. Automation network having a master subscriber (M) carrying out safety control, at least one first slave subscriber (S1) and one second slave subscriber (S2), wherein the master subscriber (M), the first slave subscriber (S1) and the second slave subscriber (S2) are connected to one another via a data transmission path (Bus) and each have a safety layer and a data link layer, wherein, during transmitting operation, the safety layer determines a safety code using a safety code determination method for a safety data block to be transmitted, and the data link layer forms a data packet containing the safety data block and the safety code for transmission on the data transmission path,
wherein, during receiving operation, the data link layer extracts a safety data block and an associated safety code from a data packet received via the data transmission path, and the safety layer verifies the safety code for the safety data block using the safety code determination method,
wherein the master subscriber and the first slave subscriber and the second slave subscriber use safety codes for interchanging safety data blocks,
wherein a first safety requirement level is assigned to the first slave subscriber (S1) and a second safety requirement level is assigned to the second slave subscriber (S2), wherein the first safety requirement level and the second safety requirement level differ, wherein a safety code is determined by the first slave subscriber (S1) using a first safety code determination method and is determined by the second slave subscriber (S2) using a second safety code determination method, wherein the first safety code determination method and the second safety code determination method differ, and wherein the master subscriber (M) and the first slave subscriber (S1) use the first safety code determination method for interchanging safety data blocks, and the master subscriber (M) and the second slave subscriber (S2) use the second safety code determination method for interchanging safety data blocks,
**characterized in that**
the master subscriber (M) organizes the data traffic in the form of data packets which are composed of control data and useful data, wherein the control data in the data packet contain an item of address information which identifies the transmitter or receiver, wherein address allocation for the at least first slave subscriber (S1) with the first safety requirement level and for the at least second slave subscriber (S2) with the second safety requirement level is carried out independently of one another.

5. Automation network according to Claim 4, wherein the first and second safety code determination methods carry out a cyclic redundancy check, wherein a first safety code generator polynomial is assigned to the first safety code determination method and a second safety code generator polynomial is assigned to the second safety code determination method,
wherein the master subscriber (M) and the first slave subscriber (S1) use the first safety code generator polynomial for the cyclic redundancy check for interchanging a safety data block, and the master subscriber and the second slave subscriber (S2) use the second safety code generator polynomial for the cyclic redundancy check for interchanging a safety data block.

6. Automation network according to Claim 5, wherein different residual error probabilities for the occurrence of an error are assigned to the first and second safety requirement levels, and wherein the Hamming distance of the first safety code generator polynomial differs from the Hamming distance of the second safety code generator polynomial.

7. Automation network according to any one of Claims 4 to 6, wherein the data transmission path is an Ethernet-based field bus.

## Revendications

1. Procédé pour faire fonctionner une commande de sécurité sur un réseau d'automatisation comprenant un nœud maître (M) qui exécute la commande de sécurité, au moins un premier nœud esclave (S1) et un deuxième nœud esclave (S2),
le nœud maître (M), le premier nœud esclave (S1) et le deuxième nœud esclave (S2) étant reliés entre eux par le biais d'un trajet de communication de données (Bus) et possédant respectivement une couche de sécurité et une couche de transmission de données,
en mode d'émission, la couche de sécurité déterminant, pour un bloc de données de sécurité à envoyer, un code de sécurité à l'aide d'un procédé de détermination de code de sécurité et la couche de transmission de données formant un paquet de données avec le bloc de données de sécurité et le code de sécurité pour l'envoi sur le trajet de communication de données,
en mode de réception, la couche de transmission de données extrayant un bloc de données de sécurité et un code de sécurité associé d'un paquet de données reçu par le biais du trajet de communication de données, et la couche de sécurité vérifiant le code de sécurité pour le bloc de données de sécurité avec le procédé de détermination de code de sécurité,
le nœud maître et le premier nœud esclave et le deuxième nœud esclave utilisant des codes de sécurité lors d'un échange de blocs de données de sécurité,
un premier niveau d'exigence de sécurité étant associé au premier nœud esclave (S1) et un deuxième niveau d'exigence de sécurité au deuxième nœud esclave (S2), le premier niveau d'exigence de sécurité et le deuxième niveau d'exigence de sécurité étant différents,
un code de sécurité étant identifié par le premier nœud esclave (S1) avec un premier procédé de détermination de code de sécurité et par le deuxième nœud esclave (S2) avec un deuxième procédé de détermination de code de sécurité, le premier procédé de détermination de code de sécurité et le deuxième procédé de détermination de code de sécurité étant différents, et
le nœud maître (M) et le premier nœud esclave (S1) utilisant le premier procédé de détermination de code de sécurité pour un échange de blocs de données de sécurité et le nœud maître (M) et le deuxième nœud esclave (S2) le deuxième procédé de détermination de code de sécurité pour un échange de blocs de données de sécurité, **caractérisé en ce que**
le trafic de données depuis le nœud maître (M) est organisé sous la forme de paquets de données qui se composent de données de commande et de données utiles, les données de commande dans le paquet de données contenant une information d'adresse qui identifie l'expéditeur ou le destinataire, une attribution d'adresse pour l'au moins un premier nœud esclave (S1) étant effectuée avec le premier niveau d'exigence de sécurité et pour l'au moins un deuxième nœud esclave (S2) avec le deuxième niveau d'exigence de sécurité indépendamment l'un de l'autre.

2. Procédé selon la revendication 1, le premier et le deuxième procédé de détermination de code de sécurité réalisant un contrôle de redondance cyclique, un premier polynôme générateur de code de sécurité étant attribué au premier procédé de détermination de code de sécurité et un deuxième polynôme générateur de code de sécurité au deuxième procédé de détermination de code de sécurité, le nœud maître (M) et le premier nœud esclave (S1) employant le premier polynôme générateur de code de sécurité pour le contrôle de redondance cyclique pour un échange d'un bloc de données de sécurité et le nœud maître et le deuxième nœud esclave (S2) le deuxième polynôme générateur de code de sécurité pour le contrôle de redondance cyclique pour un échange d'un bloc de données de sécurité.

3. Procédé selon la revendication 2, des probabilités d'erreur résiduelle différentes étant attribuées au premier et au deuxième niveau d'exigence de sécurité pour la survenance d'une erreur et la distance de Hamming du premier polynôme générateur de code de sécurité étant différente de la distance de Hamming du deuxième polynôme générateur de code de sécurité.

4. Réseau d'automatisation comprenant un nœud maître (M) qui exécute la commande de sécurité, au moins un premier nœud esclave (S1) et un deuxième nœud esclave (S2),
le nœud maître (M), le premier nœud esclave (S1) et le deuxième nœud esclave (S2) étant reliés entre eux par le biais d'un trajet de communication de données (Bus) et possédant respectivement une couche de sécurité et une couche de transmission de données,
en mode d'émission, la couche de sécurité déterminant, pour un bloc de données de sécurité à envoyer, un code de sécurité à l'aide d'un procédé de détermination de code de sécurité et la couche de transmission de données formant un paquet de données avec le bloc de données de sécurité et le code de sécurité pour l'envoi sur le trajet de communication de données,
en mode de réception, la couche de transmission de données extrayant un bloc de données de sécurité et un code de sécurité associé d'un paquet de données reçu par le biais du trajet de communication de données, et la couche de sécurité vérifiant le code de sécurité pour le bloc de données de sécurité avec le procédé de détermination de code de sécurité,
le nœud maître et le premier nœud esclave et le deuxième nœud esclave utilisant des codes de sécurité pour un échange de blocs de données de sécurité,
un premier niveau d'exigence de sécurité étant associé au premier nœud esclave (S1) et un deuxième niveau d'exigence de sécurité au deuxième nœud esclave (S2), le premier niveau d'exigence de sécurité et le deuxième niveau d'exigence de sécurité étant différents,
un code de sécurité étant identifié par le premier nœud esclave (S1) avec un premier procédé de détermination de code de sécurité et par le deuxième nœud esclave (S2) avec un deuxième procédé de détermination de code de sécurité, le premier procédé de détermination de code de sécurité et le deuxième procédé de détermination de code de sécurité étant différents, et
le nœud maître (M) et le premier nœud esclave (S1) utilisant le premier procédé de détermination de code de sécurité pour un échange de blocs de données de sécurité et le nœud maître (M) et le deuxième nœud esclave (S2) le deuxième procédé de détermination de code de sécurité pour un échange de blocs de données de sécurité, **caractérisé en ce que**
le nœud maître (M) organise le trafic de données sous la forme de paquets de données qui se composent de données de commande et de données utiles, les données de commande dans le paquet de données contenant une information d'adresse qui identifie l'expéditeur ou le destinataire, une attribution d'adresse pour l'au moins un premier nœud esclave (S1) étant effectuée avec le premier niveau d'exigence de sécurité et pour l'au moins un deuxième nœud esclave avec le deuxième niveau d'exigence de sécurité (S2) indépendamment l'un de l'autre.

5. Réseau d'automatisation selon la revendication 4, le premier et le deuxième procédé de détermination de code de sécurité réalisant un contrôle de redondance cyclique, un premier polynôme générateur de code de sécurité étant attribué au premier procédé de détermination de code de sécurité et un deuxième polynôme générateur de code de sécurité au deuxième procédé de détermination de code de sécurité,
le nœud maître (M) et le premier nœud esclave (S1) employant le premier polynôme générateur de code de sécurité pour le contrôle de redondance cyclique pour un échange d'un bloc de données de sécurité et le nœud maître et le deuxième nœud esclave (S2) le deuxième polynôme générateur de code de sécurité pour le contrôle de redondance cyclique pour un échange d'un bloc de données de sécurité.

6. Réseau d'automatisation selon la revendication 5, des probabilités d'erreur résiduelle différentes étant attribuées au premier et au deuxième niveau d'exigence de sécurité pour la survenance d'une erreur et la distance de Hamming du premier polynôme générateur de code de sécurité étant différente de la distance de Hamming du deuxième polynôme générateur de code de sécurité.

7. Réseau d'automatisation selon l'une des revendications 4 à 6, le trajet de transmission de données étant un bus de terrain selon le principe Ethernet.
